# EUROPEAN PATENT SPECIFICATION

(11) **EP 1 440 946 B1**
(45) Date of publication and mention of the grant of the patent: **05.04.2006**
(21) Application number: 03258217.3
(22) Date of filing: 23.12.2003
(51) Int. Cl.: C03B 37/012, C03B 23/043, F23D 14/58

(54) **Method and apparatus for processing a preform for an optical fibre using a burner**
Verfahren und Vorrichtung zum Behandeln einer Vorform für optische Fasern mittels eines Brenners
Procédé et appareil de traitement d'une préforme pour fibres optiques par moyens d'un brûleur

(30) Priority: 25.12.2002 JP 2002374375
(43) Date of publication of application: 28.07.2004
(73) Proprietor: Shin-Etsu Chemical Company, Ltd., Tokyo 100-0004 (JP)
(72) Inventor: Shimizu, Yoshiaki Advanced Function. Mat. Research, Annaka-shi Gunma-ken 379-0116 (JP)
(74) Representative: Senior, Alan Murray

(56) References cited:
- EP-A- 1 254 867
- DE-A- 19 914 507
- US-A- 5 719 698
- PATENT ABSTRACTS OF JAPAN vol. 2000, no. 11, 3 January 2001 (2001-01-03) -& JP 2000 220810 A (SHIN ETSU CHEM CO LTD), 8 August 2000 (2000-08-08)
- PATENT ABSTRACTS OF JAPAN vol. 013, no. 211 (C-597), 17 May 1989 (1989-05-17) -& JP 01 028239 A (SHIN ETSU CHEM CO LTD;OTHERS: 01), 30 January 1989 (1989-01-30)

## Description

### BACKGROUND OF THE INVENTION

### Field of The Invention

This invention relates to processing of a preform for optical fiber, and more particularly, to a method for processing an optical fiber preform by use of a specific type of burner system and to an apparatus suited to carry out the processing method. The invention also relates to a burner system which is adapted for use in the method and apparatus mentioned above.

### Related Art

For the manufacture of optical or lightguide fibers, a porous glass matrix is initially made by deposition of fine particles of glass by a vapor-phase axial deposition (VAD) technique, an outside vapor deposition technique (OVD) or the like. The glass matrix is dehydrated and sintered or consolidated to obtain a clear vitrified mother ingot. This ingot is then roughly drawn, in an electric furnace, into a primary processed product called preform whose diameter is reduced to an extent as adapted for use in fiber drawing.

The preform obtained in this manner is subsequently subjected to a secondary processing procedure using, for example a glass-working lathe. This secondary processing procedure includes (i) an elongation procedure of adjusting an outer diameter with in high precision, (ii) a flame polishing procedure wherein silica powder (hereinafter referred to as silica cloud) is deposited on the surface of the preform and fine defects are removed with the attendant removal of a thermal stress left inside the preform, and (iii) a drawing procedure where the preform is processed into a shape suited for fiber drawing at an end thereof, and the like.

The outer diameter of the preform should be precisely adjusted. With a preform whose outer diameter is not uniform, when such a preform is set in a heating furnace of a fiber drawing apparatus and started to feed in, a space is inevitably established between a gas sealing member of the heating furnace and the preform. As a result, many problems would arise in that the probability of fiber breakage increases owing to the oxidation of furnace materials, deposition of foreign matters and the like and the variation in fiber diameter increases due to a gas flow being changed inside the heat furnace. For these reasons, the variation of the outer diameter should be usually suppressed to a level of below ±1% along the length of the preform.

The silica cloud deposited on the preform surfaces and defects in the surfaces may lead to an abrupt variation of fiber diameter and may result, in the worst case, in the breakage of the preform. Thus, it is desirable to remove the cloud and defects by subjecting the preform to flame polishing at a processing stage thereof.

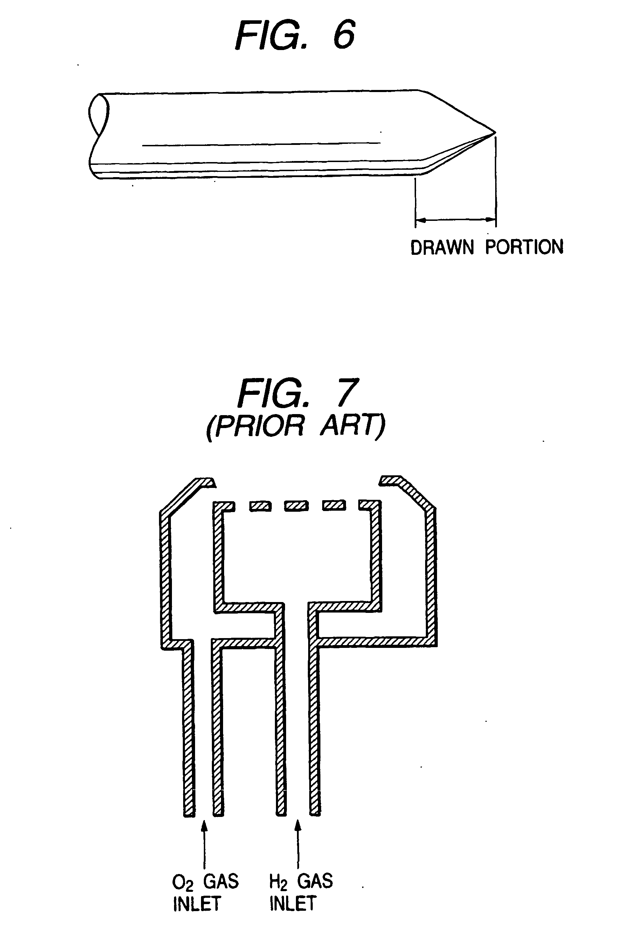

For shortening the time of from the commencement of fiber drawing of a preform to the stabilization in diameter of an optical fiber, it is favorable to process the preform, particularly at the end or ends thereof, in a tapered form as is particularly shown in Fig. 6.

As having set forth hereinabove, the processing of a preform may be divided into several different procedures, for which appropriate heating power and flame shape or thickness that depend on the respective procedures are required for easy and reliable control of the respective processing procedures.

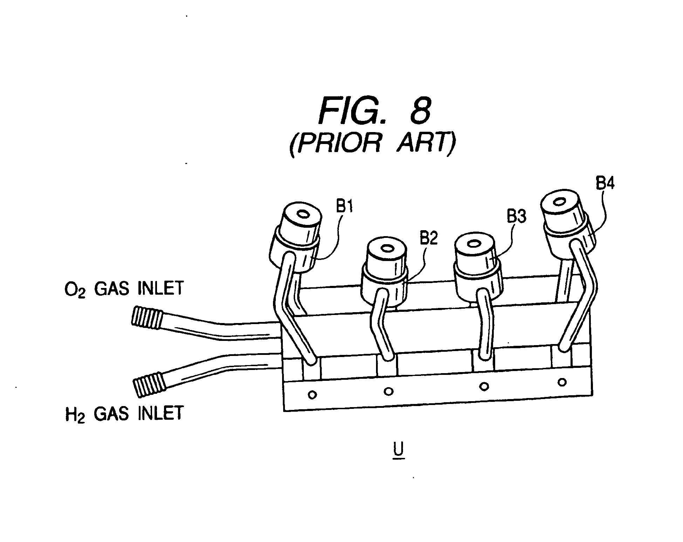

For a conventional burner unit used for preform processing, a small-sized, compact burner made of silica glass or a stainless steel and having such a structure as shown in Fig. 7 is employed. In practice, four to six small-sized burners (e.g. four burners B1 to B4 in Fig. 8) are arranged as shown in Fig. 8 to provide a burner unit U. Alternatively, a number of the burners of the type shown in the figure have been in use as arranged in a semi-circular or circular form.

These burners are each supplied with a supporting gas and a flammable gas therein. The combustion flame of a gas mixed at the inside or outlet of the burner is used to heat a preform for desired processing purposes. In general, oxygen is used for the supporting gas and hydrogen or methane or propane is used for the flammable gas. In this art, the type of burner is broadly classified into a premixing type gas burner wherein gases are premixed inside the burner beforehand and burnt at the tip of the burner and a post-mixing type gas burner wherein gases are separately fed to the pipe of the burner, and mixing and combustion are allowed to occur simultaneously at the tip of the burner.

When using hydrogen as a flammable gas, backfire is liable to occur wherein hydrogen burns inside the burner. In this sense, choice of the latter is preferred. This type of burner is described, for example, in Japanese Laid-open Patent Application No. 52-45740.

Another instance of a burner used for processing a preform is described, for example, in Japanese Laid-open Patent Application No. 2000-220810 wherein a number of nozzles for supporting gas are arranged in a specific manner. More particularly, a number of inner pipes through which a supporting gas is passed are accommodated in an outer cylinder, into which a flammable gas is fed, at different intervals depending on the location inside the outer cylinder. That is, the inner pipes are located more densely at a position nearer to the outer periphery of the cylinder. In this burner, a supporting gas and a flammable gas are mixed at the tip of the burner thereby obtaining a flame of potential heat power thereat.

In conventional burners, the thickness and intensity of a gas flame have been changed by changing the flow rates of a supporting gas and a flammable gas, respectively.

When a preform is processed by use of such a burner under conditions where a flame is turned down, for example, the flow rates of gases are made small, so that the heating power becomes weakened. More particularly, it has been difficult to obtain high heating power under thin flame conditions.

Accordingly, with the case where a thin, intense flame is required, e.g. when a preform is tapered at an end thereof in a manner as shown in Fig. 6, it is necessary to heat a limited narrow region alone so that the diameter of the preform is made small. In contrast, when a preform is heated by means of a thick flame, the preform is heated over a wide region thereof, making it difficult to form a well-tapered end.

Of course, when the flame is turned up and made thick and the heating region is extended, the flow rates of gases increase, so that heating power becomes high. This makes it difficult to obtain a weak gas flame. In the drawing and flame polishing procedures of adjusting an outer diameter, gentle heating over a wide range of a preform is necessary. If a flame is made thick, heating power has become too intense to process the preform in high precision. For the burner used in such a situation as set out above, it is desirable that the thickness of a gas flame can be adjusted arbitrarily depending on the diameter of a preform and that the heating power of the flame can also be arbitrarily controlled depending on the conditions being applied to the preform.

A flame controlling method of minimizing a residual strain by flame polishing is described, for example, in Japanese Laid-open Patent Application No. 256027.

In Japanese Laid-open Patent Application Nos. 2000-143268 and 2000-203864, a preform end drawing method and an apparatus for carrying out the method are described. However, any method of controlling a burner flame over a wide range covering different preform processing procedures is not described at all.

As having stated hereinbefore, for processing of a preform, it is desirable to make a flame whose thickness and intensity can be changed over a wide range depending on the processing procedure and conditions. With conventional burners, it is extremely difficult to form different types of flames, including thin and thick, intense and weak flames, from the same burner that depend on the processing procedures and conditions.

### SUMMARY OF THE INVENTION

It is accordingly an object of the invention to provide a method for automatically processing a preform, by use of one burner unit, in different ways including dummy bonding, elongation, flame polishing, drawing of the preform at an end or ends thereof, flame cutting and the like.

It is another object of the invention to provide a burner system, which is particularly suitable for realizing the method and apparatus of the invention.

It is a further object of the invention to provide an apparatus suited to carry out the method mentioned above and comprising the burner system mentioned above.

The above objects can be achieved, according to one aspect of the invention, by a method for processing a preform supported with a stationary chuck and a movable chuck of a glass-working lathe, the method comprising:-
providing a burner of a type which is able to create flame-controlled conditions by controlling the respective flow rates of a flammable gas and a supporting gas wherein the supporting gas is discharged from at least one group of discharge pipes co-axially classified into plural groups that are, respectively, controllable with respect to a glass flow rate; and
processing a preform under the flame-controlled conditions.

Preferably, the plural groups of the discharge pipes are provided within a hollow body through which the flammable gas is passed, and the plural groups are co-axially arranged within the hollow body from a center of the hollow body toward an outer periphery, and the discharge pipes are so arranged that the supporting gas is passed therethrough in a manner as to be controllable in every group

The hollow body is preferably a hollow cylinder and the plural groups of discharge pipes are concentrically disposed within the hollow cylinder closed at one end and open at the other end.

According to another aspect of the invention, there is provided a burner system as defined in claims 7-17.

According to a further embodiment of the invention, there is also provided a processing apparatus including the burner system defined above.

### BRIEF DESCRIPTION OF THE ACCOMPANYING DRAWINGS

Fig. 1 is a schematic side view of a glass-working lathe according to the invention;
Fig. 2 is a schematic perspective view showing an instance of a burner unit according to the invention;
Figs. 3A and 3B are, respectively, a top view showing a nozzle portion of the burner shown in Fig. 2 wherein Fig. 3A shows inner nozzles grouped in three or four sections and Fig. 3B shows a modification of a nozzle arrangement in an innermost section;
Fig. 4A is a schematic view showing an instance of gas pipes for controlling gas flow rates through control valves or means according to the invention and Fig 4B is a schematic view showing a distributor structure for the respective gases:
Figs. 5A to 5E are, respectively, different processing procedures of a preform to which a burner unit according to the invention is applied;
Fig. 6 is a schematic view illustrating an ideal shape of an end of a preform for subsequent fiber drawing;
Fig. 7 is a schematic sectional view showing a conventional compact burner; and
Fig. 8 is a perspective view showing an instance of a conventional burner arrangement including four compact burners having such a structure as illustrated in Fig. 7.

### EMBODIMENTS OF THE INVENTION

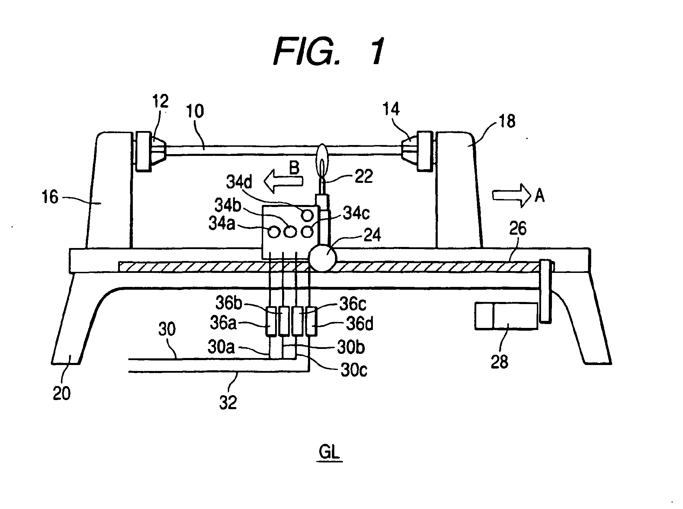

Preferred embodiments of the invention are described in detail with reference to the accompanying drawings, particularly Figs. 1 to 5E. It will be noted that like reference numerals indicate like parts or members throughout the specification.

Fig. 1 shows, in a simplified form, a typical arrangement of a glass-working lathe useful for processing a preform according to the invention. A glass-working lathe GL is shown as including a preform 10 which is rotatably held with stationary and movable chucks 12, 14 at opposite ends thereof. The chuck 12 is supported with a stationary support 16 and the movable chuck 14 is supported with a tailstock 18 for pulling or pushing the preform 10 as shown in the figure in such a, way that the preform is kept horizontal. These supports 14, 16 are, in turn, mounted on a base 20. A burner 22 is mounted on a carriage 24 that is associated with a displacement means 26, such as a screw, for displacing the carriage 24 longitudinally. The displacement means 26 is so set as to be parallel to an axis connecting the chucks 12, 14 and is driven with a motor 28 through a chain 29, a gear (not shown) and the like. The tailstock 18 is likewise driven with a driving unit (not shown).

The burner 22 is connected to gas sources 31, 33 through lines 30 and 32. The line 30 has branch lines 30a, 30b, 30c which are, respectively, connected to the burner 22 through valves 34a, 34b, 34c and mass flow controllers 36a, 36b, 36c. On the other hand, the line 32 is likewise connected to the burner 22 through a valve 34d and a mass flow controller 36d. The valves 34a to 34d and the mass flow controllers 36a to 36d are, respectively, controlled by means of a control unit described hereinafter. In the practice of the invention, a burner system is constituted of the burner 22, the lines 30, 32 including branch lines 30a, 30b, 30c, and a flow rate control means including the valves 34a to 34d and the mass flow controllers 36a to 36d. The respective control means may be made of any other means such a control valve connected to the control unit so far as the flow rate of a gas can be controlled. It will be noted that the term "preform" is intended to mean not only a preform having a diameter of 20 to 100 mm, but also a silica glass matrix having a diameter of 100 mm or below.

In Fig. 1, the preform is kept horizontal, and may be kept in a vertical fashion as is known in the art.

In operation, while moving the tailstock 18 longitudinally under computer-controlled conditions toward the right side as viewed in the figure and indicated by arrow A, the burner is moved, for example, along a direction opposite to that of the tailstock 18 as indicated by arrow B, or may be stopped or moved in the same direction as the tailstock 18. In other words, the burner 22 is arranged to arbitrarily move in opposite directions. The preform 10 is applied with heating power from the burner 22, which varies depending on the type of processing. According to the invention, different processing procedures of a preform including dummy bonding, elongation to a predetermined value of an outer diameter, flame polishing, drawing of a preform to provide a well-shaped form suited for fiber drawing, flame cutting and the like are realized using a specific type of burner system that has such a structure as to arbitrarily control the degree of heating power in every gas flow line for a supporting gas irrespective of the thickness of a burner flame.

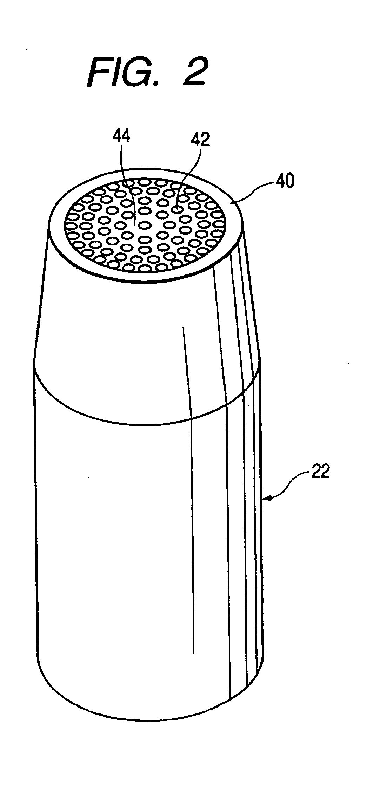

Reference is now made to Figs. 2 to 4 wherein the burner 22 useful for carrying out the processing method of the invention is illustrated. As shown in Fig. 2, the burner 22 includes an outer hollow cylinder 40 with a hollow truncated cone-shaped form at an upper portion thereof for allowing a flame to be converged, and a plurality of inner pipes 42 through which a supporting gas is discharged. Reference numeral 44 indicates spaces other than the inner pipes 42 within the outer hollow cylinder 40, from which a flammable gas is discharged and mixed with the supporting gas from the inner pipes 42 at the burner port.

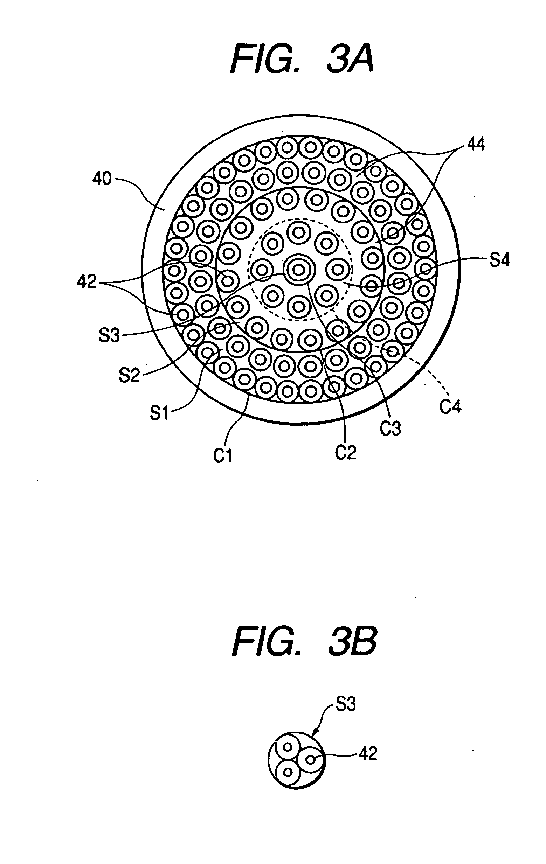

The plurality of inner pipes 42 are classified into three groups in Fig. 3A. More particularly, the inner pipes 42 are classified as accommodated in three concentric sections S1, S2 and S3 within the outer hollow cylinder 40 as viewed from above. The section S1 indicates a region between concentric circular lines C1 and C2, the section S2 is for a region between concentric circular lines C2 and C3, and the section S3 is within a region indicated by a circular line C3. In practice, no circular lines C1, C2 and C3 exist but are depicted only for convenience's sake. The inner pipes 42 in each section are taken as one group and the groups of the inner pipes 42 are separately controlled with respect to the gas flow rate. As a matter of course, the number of the sections or groups may be 3 or more. For instance, the outer hollow cylinder may be concentrically divided into four sections wherein the section S2 is further divided into halves in a manner as indicated by a dotted line C4 between the circular lines C2 and C3.

With respect to the innermost section, at least one inner pipe 42 is depicted in Fig. 3A. The inner pipes 42 are usually accommodated, as shown in Fig. 3A, in such a way as to be more dense from the center of the outer cylinder toward the outer periphery thereof although up to three inner pipes may be set at the innermost section S3 as shown in Fig. 3B.

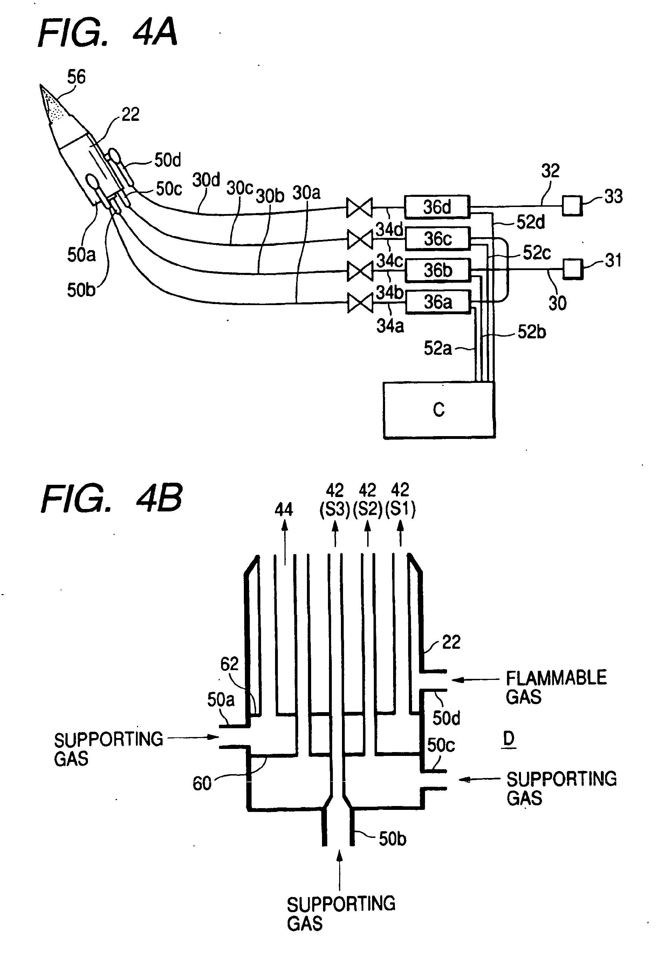

The outer hollow cylinder 40 is closed at the bottom thereof and has an inlet for a flammable gas and plural inlets for a supporting gas as will be hereinafter described in more detail with reference to Figs. 4A and 4B. The inner pipes 42 provided at the sections S1, S2 and S3 are, respectively, connected to the inlets of the outer hollow cylinder 40.

The outer hollow cylinder 40 has been illustrated hereinabove. Hollow bodies having different shapes such as a rectangle, polygons and the like may also be used in place of the hollow cylinder. In this case, inner pipes are arranged along the profile or outer shape of the hollow body wherein groups of the inner pipes may be arranged in similar forms of the outer shape of the hollow body. Preferably, the inner pipes are located more densely from the center toward the outer side. The hollow body is preferably cylindrical.

In this arrangement, a flammable gas such as hydrogen, methane, propane or the like is passed through the hollow outer cylinder 40, and a supporting gas such as of oxygen is passed through the inner pipes 42. Thus, the supporting gas and the flammable gas are separately fed into the burner 22 and mixed at the tip or burner port thereof and combusted.

For the control of the gas flow rates passing through the inner pipes 42 and the spaces 44 in the respective sections S1 to S3, the line 30 connected to a supporting gas source 31 is trifurcated as the branch lines 30a, 30b, 30c which are, respectively, connected to joints 50a, 50b, 50c for supplying the supporting gas to the outer hollow cylinder 40 through a distributor structure D. A line 32 for a flammable gas is connected to a joint 50d attached to the side wall of the outer hollow cylinder 40. Each line has a hand valve indicated at 34a, 34b, 34c or 34d and a mass flow controller (which may be hereinafter sometimes referred to as MFC) indicated at 36a, 36b, 36c or 36d, with which gas flow rates can be, respectively, controlled with a signal outputted from a control unit C through lines 52a, 52b, 52c, 52d as shown. This type of control unit is known in the art and is not described in detail herein.

The reason why the hand valve 34a, 34b, 34c or 34d and the mass flow controller indicated at 36a, 36b, 36c or 36d are provided is as follows. When a preform is processed while an operator manually controls the respective flow rates, the MFC s are all fully opened, under which the valves are manually operated to change the flow rates as desired. On the other hand, where the flow rates of gases are automatically controlled such as by a computer in the control unit C, the valves are fully opened so that the flow rates are, respectively, controlled by means of the mass flow controllers. Of course, control valves or other control means may be used in place of the combination of a hand valve and a mass flow controller as is well known in the art.

The distributor structure D is described. This is particularly depicted in Fig. 4B. The distributor structure D of Fig. 4B is arranged as follows: the joint 50b is directly connected to the inner pipe 42 in the section or region S3; the supporting gas passed through the joint 50c is transmitted to a group of inner pipes 42 in the section S2; the supporting gas supplied through the joint 50a is passed to a group of inner pipes, 42 in the section S1; and the flammable gas passed through the joint 50d is distributed throughout the outer hollow cylinder other than the inner pipes. Reference numerals 60, 62, respectively, indicate a partition plate for ensuring hermetic, complete separation of the gases from the respective joints.

The burner system is operated in the following manner. A flammable gas from the gas source 33 is passed to the outer cylinder 40 through the line 32, MFC 36d, valve 34d, and joint 50d. On the other hand, a supporting gas is passed and distributed to the respective groups of inner pipes 42 through the corresponding MFC's, hand valves, and joints.

In the burner structure as set forth hereinabove, the supporting gas runs through at the outer region S1 (i.e. closer to the outer periphery) in amounts larger than at the inner region (closer to the center region S3), whereas the flammable gas flows out in amounts larger at a portion closer to the central axis of the outer cylinder. Both gases are mixed at the port of the burner and combusted as 56 in Fig. 4A.

Since the supporting gas runs off in larger amounts at the outer peripheral section as 1, the flame 56, shown in Fig. 4A, is not extended beyond the opening of the outer cylinder. This allows flow rates of the flammable gas and the supporting gas in each section to be readily controlled. Thus, easy control of the shape or thickness of the flame, heating region, the distribution of temperature that depend on the type of preform processing procedure is ensured.

If the number of groups of the inner pipes within the outer hollow cylinder of the burner is increased, the intensity of a flame may be more precisely controlled, but with the control being more complicated. In the practice of the invention, it is preferred to provide three or four sections or groups of inner pipes as is shown in Fig. 3.

Metals such as stainless steels, silica glass and the like may be mentioned as a material for the burner. In view of the high reproducibility and the ease in increasing the number of inner fine pipes, a metal is preferred except the case where high cleanliness is required. If high cleanliness is necessary, silica glass is favorably used.

For carrying out several different preform processing procedures, the inner diameter of the outer cylinder generally ranges from 25 to 50 mm, and an opening diameter of the inner pipe generally ranges from 1 to 3 mm. These diameters may vary depending on the manner and the number of inner pipes arranged in each section. The flow rate of a flammable gas supplied from a gas source is generally set at a value within a range of up to 500 SLM (standard liter per minute), and the flow rate of a supporting gas is set at a value within a range of 0 to 300 SLM. In this connection, however, the inner pipe diameter may be varied depending on the section and the type of processing.

In the present invention, the inner pipes are arranged in plural sections in a manner as being controlled in individual sections with respect to the flow rate. If necessary, a gas flow in a given section may be stopped by closing a corresponding hand valve. As will be apparent from the foregoing, the flow rates of both a flammable gas and a supporting gas can be arbitrarily controlled wherein the flow rates of the supporting gas in different regions or sections, cylindrically separated, for example, of the outer hollow cylinder as viewed from above can be, respectively, controlled. Thus, a very precise control of a flame with respect to the thickness and intensity becomes possible with ease. Easy control of a flame leads to easy control of processing procedures. More particularly, parameters essentially required for processing of a preform include the intensity and thickness of a flame, i.e. an oxyhydrogen flame in this case, and the movements and moving speeds of the burner and tailstock. These parameters are interrelated with one another, and conventional preform processing procedures have been carried out under relatively rough control in the intensity and thickness of a flame in relation to other parameters. As a matter of course, a more precise control of the flame leads to a more reliable, easier control of many preform processing procedures without adjustment of a distance between the preform and a burner port and without change of a burner unit with another type of burner unit for permitting a more precise control of a flame for a selected processing procedure. This leads to saving of time and labor undesirably required for the adjustment and the change. More particularly, if a flame is not precisely, reliably controlled, it undesirably becomes necessary to change the distance between a burner and a preform suited for every cycle of processing procedure and to replace a burner per se with a more appropriate one. This problem can be overcome by use of the burner system according to the invention wherein flame conditions can be appropriately controlled by controlling flow rates of a flammable gas and a supporting gas. The precise flame control can be realized by controlling the flow rates of a supporting gas passed through plural groups of inner pipes, which are concentrically separated from one another, for example.

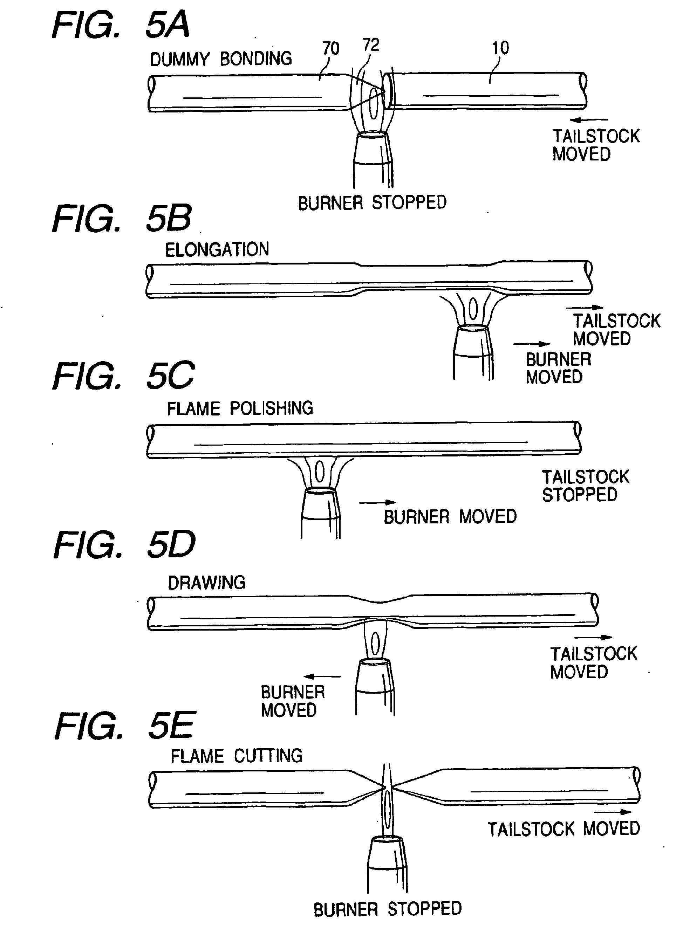

The processing procedures of a preform using the burner system according to the invention are particularly described with reference to Figs. 5A to 5E.

Fig. 5A schematically shows dummy bonding including a heating step and a bonding-by-press step. In the figure, a dummy rod 70 having a cone-shaped tip portion 72 and used to hold a preform 10 is heated for bonding with the preform 10 while moving a tailstock along the direction indicated by the arrow without moving the burner to such an extent that part of the preform is molten. This procedure requires the most intense heating power. For example, when using a preform having a diameter of 60 mm and a burner of the type shown in Fig. 3A, flow rates of hydrogen used as a flammable gas and oxygen supplied to inner pipes at S1, S2 and S3 are as shown in Table 1 below.

**Table 1**

| Flow rate of hydrogen (SLM) | Flow rate of oxygen | | |
|---|---|---|---|
| | Group of inner pipes in S1 | Group if inner pipes in S2 | Inner pipe in S3 |
| 250 | 130 | 50 | 10 |

For this purpose, oxygen is fully discharged from all the sections and hydrogen is passed at a relatively great flow rate. When the heating is continued over about 10 minutes, the tapered portion is partially molten, followed by instantaneously pressing against the dummy rod and bonding together. The movement at the pressing is, for example, at about 60 mm. Thereafter, the flame is turned down, under which the bonded portion is parched for about 5 minutes. The flow rates for this purpose are indicated below.

**Table 2**

| | | | |
|---|---|---|---|
| Flow rate of hydrogen (SLM) | Flow rate of oxygen | | |
| | Group in S1 | Group in S2 | Group in S3 |
| 250 | 65 | 25 | 5 |

The bonding procedure set out above is for the preform having a diameter of 60 mm. If the diameter is increased to 80 mm, the flow rate has to be doubled with similar results.

It will be noted that although the bonding of a dummy rod at one end is depicted in Fig. 5A, the rods are usually bonded to opposite ends of the preform.

Fig. 5b shows elongation of a preform including heating and elongating steps where the tailstock is moved in a direction opposite to the case of Fig. 5a and the burner is also moved in the same direction as shown. In this case, high heating power as in Table 1 is necessary and the burner is turned up substantially in the same manner as in Fig. 5A. For the elongation, a preform having an uneven surface and a diameter, for example, 67 mm is elongated to obtain a flat surface-bearing preform having a diameter of 60 mm. When the flow rates of oxygen are determined, the tailstock and the burner are automatically moved at a given speed and a given movement according to signals from the control unit C. This automatic movement may be carried out in a stepwise manner or continuously in this and other cases.

Fig. 5C shows flame polishing on the outer surface of a preform. In Fig. 5C, the burner is moved while stopping the tailstock. This flame polishing is carried out to remove silica clouds from the preform surface, fine defects formed in the course of the manufacture of the preform and also a thermal strain from the inside of the preform. For the flame polishing, if heating power is too high, the silica deposited on the preform surface undergoes sublimation and may be, in most cases, re-deposited as a silica cloud on the preform surface. On the other hand, if the heating temperature is too low, the removal of defects and silica clouds may become unsatisfactory, or satisfactory heating to the inside of the preform is not possible with a residual strain being left. If the residual strain inside the preform is not removed to a satisfactory extent, cracks may be caused to occur in the vicinity of the preform surface on way of cooling after completion of flame polishing.

In the flame polishing, the intensity of heating power is an important parameter, not to mention the moving speed of the burner. Accordingly, the flow rates of gases and the moving speed of the burner should be optimized, as parameters, according to the outer diameter of the preform. More particularly, the flow rates of gases, the moving speed and the outer diameter of perform are interdependent.

With drawing as shown in Fig. 5D, initial heating is carried out under high heating power. At the stage where the preform is elongated to an extent as to permit the preform just before melting up into pieces, whereupon the flow rates of a flammable gas and a supporting gas and the section or sections where the supporting gas is passed are properly selected or determined. Under these conditions, the thickness of the flame is gradually reduced, under which the tailstock is further moved to create an intended drawn shape.

In usual practice, the drawing may include primary heating, primary drawing, secondary heating and secondary drawing. The amounts of gases, movements and/or moving speeds of the burner and tailstock are, respectively, determined to obtain optimum flame conditions suited for the respective steps. These parameters are interrelated with one another and are not always critical, respectively. In order to cope with possible problems which may be involved in wide ranges of processings, it is necessary to permit the burner arrangement or system to be precisely controlled with respect to the heating power from the burner since the movements of the burner and the tailstock can be controlled as desired

In the drawing procedure, it is important to determine that a supporting gas be passed to whichever section or sections depending on the heating power conditions required for an intended step. More particularly, when the heating powder from the flame is turned down by reducing an amount of the gas while keeping the sections through which a supporting gas flows the preform is heated over a wide area thereof, unfavorably resulting in a drawn portion being elongated. To control the length of the drawn portion as desired requires a change in thickness of the flame per se by changing the section or sections through which the gas flows or stopping a gas flow to the inner pipes in a certain section or sections. This is particularly described in example appearing hereinafter.

As described hereinabove, the flame thickness, and the flow rate of a flammable gas and the flow rates of a supporting gas through the sections can be controlled as desired, with the selection of whichever section or sections for the supporting gas being readily determined. The term "flame-controlled conditions" used herein is intended to mean those conditions established under these controls and the determination in relation to the movements and moving speeds of a tailstock and a burner unit.

Fig. 5E shows flame cutting after the drawing procedure, in which a thin flame is blown against the deeply drawn portion of the preform and cutting the preform by melting up into two pieces. The flame required for this purpose is one which is narrowed down and has a relatively high flow rate. For this purpose, flow rates of hydrogen used as a flammable gas and oxygen supplied to inner pipes at S1, S2 and S3 are as shown in Table 3 below.

**Table 3**

| | | | |
|---|---|---|---|
| Flow rate of hydrogen (SLM) | Flow rate of oxygen | | |
| | Group in S1 | Group in S2 | Group in S3 |
| 20 | 0 | 0 | 10 |

This processing may be replaced by flame cutting with a separately provided hand burner. The use of one burner for carrying out all the processing steps for preform according to the invention is very advantageous from the standpoint of labor saving and ease in automatic control of the processing parameters for preform.

As stated hereinabove, according to the invention, preforms having different sizes over a wide range may be processing into desired forms for substantially all preform processing procedures using one apparatus comprising a burner arrangement of a specific type while controlling processing conditions or parameters as desired.

The present invention is more particularly described by way of example, which should not be construed as limiting the invention thereto. Example

A burner of the type shown in Fig. 2 was set in a glass-working lathe shown in Fig. 1 and was used to drawing of a preform having a size of 60 mm. This burner had an outer hollow cylinder made of SUS 304 and having an inner diameter of 30 mm through which a hydrogen gas was passed. In the outer cylinder, fine pipes made of SUS 304 and each having an outer diameter of 3 mm and an inner diameter of 1.5 mm through which an oxygen gas was passed were arranged concentrically while grouping the fine pipes into three from inside toward outside. The groups of the fine pipes in the respective sections were, respectively, connected to different oxygen gas feed pipes. Thus, one hydrogen gas feed pipe and three oxygen gas feed pipes were provided wherein each feed pipe had a manual valve and MFC connected in series. By controlling the respective MFCs based on signals from a control unit, the movements of the burner and a tailstock and also the amounts of the gases from the respective feed pipes could be set, followed by automatic operation of the lathe. The flow rate of a hydrogen gas to be supplied to the burner was at 500 SLM (standard liter per minute) in maximum, and the flow rates of three oxygen gas flows were, respectively, 250 SLM, 150 SLM and 10 SLM, each in maximum, in the order of from the outer peripheral side of the outer cylinder, i.e. from S1 to S3 in Fig. 3A.

The drawing procedure can be broadly divided, as set out hereinbefore, into four steps of primary heating, primary drawing, secondary heating and secondary drawing. In the respective steps, the amounts of the gases, and the movements and moving directions of the burner and the tailstock were set appropriately. In this example, these parameters were set as shown in Table 4 below.

As a result, the length of the drawn portion (see Fig. 6) could be made as short as 62 mm, which was substantially the same as the diameter of the preform.

**Table 4**

| Steps | Amounts of gases from burners (SLM) | | | | Movement of burner (mm) | Movement of tailstock (mm) |
|---|---|---|---|---|---|---|
| | Hydrogen | Oxygen (S1) | Oxygen (S2) | Oxygen (S3) | | |
| Primary heating | 250 | 130 | 50 | 10 | 0 | 0 |
| Primary drawing | 200 | 1-10 | 40 | 10 | 5 | 10 |
| Secondary Heating | 130 | 0 | 60 | 7 | 5 | 10 |
| Secondary drawing | 100 | 0 | 50 | 5 | 20 | 30 |

### Comparative Example

Four burners of the type shown in Fig. 7 were attached to a glass-working lathe shown in Fig. 1 so as to process a preform having a size of 60 mm. This burner was of the type wherein hydrogen gas was blown out from a peripheral portion thereof and oxygen gas was blown out from an inner portion. Both gases were mixed at the tip of the burner and combusted. Like Example 1, the gas feeds to the burners were, respectively, changed in the order of the primary heating, primary drawing, secondary heating and secondary drawings, the burners and the tailstock were moved to form a drawn portion.

The gas feeds to the respective burners were so designed to be at 100 SLM in maximum for hydrogen gas and 50 SLM in maximum for oxygen gas, and the flow rates of the gases simultaneously supplied to the respective burners were equal to one another. The intensity of the resulting flame was controlled by simultaneously changing the gas feeds to all the burners. The gas feed per unit burner is shown in the table shown below, and a total gas feed is as much as four times the gas feed indicated below.

**Table 5**

| Steps | Gas feed to burner (SLM) | | Movement of burner (mm) | Movement of tailstock |
|---|---|---|---|---|
| | Hydrogen | Oxygen | | |
| Primary heating | 80 | 40 | 0 | 0 |
| Primary drawing | 60 | 30 | 5 | 10 |
| Secondary heating | 20 | 10 | 5 | 10 |
| Secondary drawing | 15 | 7 | 20 | 30 |

When the preform was drawn under conditions indicated in Table 5 above, the flame extended over a length of the preform, especially after the secondary heating, irrespective of the fact that the gas feed passed to the burners was reduced. As a result, the portion of the preform whose diameter was reduced was entirely heated, thus resulting in the drawn portion being elongated to 120 mm.

Thus, according to the invention, the thickness and intensity of a flame can be appropriately controlled depending on the manner and conditions of processing of a preform, thereby creating flame-controlled conditions satisfactory for different processing procedures of a preform. The thickness or shape and intensity of a flame can be appropriately controlled while taking the diameter of a preform into consideration. A preform can be processed into a desired form using the same apparatus only by changing preset conditions.

## Claims

1. A method for processing a preform (10) supported with a stationary chuck (12) and a movable chuck (14) of a glass-working lathe [GL), the method comprising:-
providing a burner (22) of a type which is able to create flame-controlled conditions by controlling the respective flow rates of a flammable gas and a supporting gas, wherein the supporting gas is discharged from at least one group of discharge pipes (42) co-axially classified into plural groups that are, respectively, controllable with respect to gas flow rate, and
processing the preform under the flame-controlled conditions.

2. The method according to claim 1, wherein the plural groups of the discharge pipes are provided within a hollow body through which the flammable gas is passed, and the plural groups are co-axially arranged within the hollow body from a center toward an outer periphery thereof, and the discharge pipes (42) are so arranged that the supporting gas is passed therethrough in a manner as to be controllable in every group.

3. The method according to claim 1 or 2 wherein said hollow body is made of a hollow cylinder (40) and the plural groups of discharge pipes are concentrically disposed within the hollow cylinder which is closed at one end and opened at the other end.

4. The method according to claim 1, 2 or 3 wherein the plural groups are three or four in number.

5. The method according to any preceding claim, wherein flow rates of gases supplied to the plurality of groups and also to spaces (S1, S2, S3) other than the discharge pipes (42) inside said burner (22) are, respectively, controlled depending on the diameter of a preform to be processed.

6. The method according to claim 5, wherein the flow rates of the gases are changeable in a stepwise manner or gradually.

7. A burner system which comprises:
a structure including a hollow body (40) closed at one end and open at the other end through which flammable gas may be passed; and
at least three groups (S1, S2, S3) of coaxially arranged inner discharge pipes (42) through which a supporting gas is to be passed and which are accommodated in the hollow body said groups including an innermost group (S3);
a plurality of gas feed lines;
a first said gas feed line (30d) being connected at one end to the hollow body;
each plural group (S1, S2, S3) being connected to one end of an individual further said gas feed line (30a, 30b, 30c);
a source of flammable gas (33) connected at the other end of the first gas line (30d) to the hollow body;
a source of supporting gas (31) connected at the other end of the further gas feed lines (30a, 30b, 30c) to the respective plural groups;
the first gas feed line (30d) having a control means (36d) for controlling the flow rate of the gas passed therethrough to the hollow body; and
each further gas feed line (30a, 30b, 30c) having a control means (36a, 36b, 36c) for controlling the flow rate of gas passed therethrough to the respective group of inner discharge pipes (S1, S2, S3),
**characterised in that** all groups (S1, S2, S3) except the innermost group (S3) include a plurality of discharge pipes (42) , that the innermost group (53) comprises a single discharge pipe (42), and **in that** the density of pipes in the groups, other than the innermost group, increases from the centre towards the periphery of the hollow body (40).

8. A burner system according to claim 7, wherein the entire interior cross-section of the hollow body (40) except for the part occupied by the discharge pipes, comprises space (44) from which in use the flammable gas supplied through the first gas feed line is discharged.

9. A burner according to claim 7 or 8 wherein the discharge pipes (42) all have the same inner and outer diameters.

10. The burner system according to claim 7, wherein said hollow body is made of a hollow cylinder (40) and the plural groups of the inner discharge pipes (42) are concentrically arranged within said hollow cylinder, respectively.

11. The burner system according to claim 10, wherein the inner discharge pipes are classified into the plural groups in a concentric fashion (S1, S2, S3).

12. The burner system according o claim 10 or 11, wherein the plural groups of the inner discharge pipes are concentrically arranged within said outer hollow cylinder and the innermost group includes up to three pipes.

13. The burner system according to claim 12, wherein said innermost group includes one pipe.

14. The burner system according to any one of claims 7 to 13 used with a flammable gas of hydrogen or a hydrocarbon gas and with a supporting gas consisting essentially of oxygen.

15. The burner system according to any one of claims 7 to 13 used with a flammable gas which consists essentially of hydrogen.

16. The burner system according to any one of claims 7 to 15 wherein said control means is made of a hand valve and a mass flow controller.

17. The burner system according to any one of claims 7 to 16 further comprising a control unit from which a control signal is transmitted to the various control means for controlling a flow rate of a gas to be supplied through said control means.

18. A preform processing apparatus including a burner system according to any one of claims 7 to 17.

## Patentansprüche

1. Verfahren zum Bearbeiten eines Vorformlings (10), der von einer stationären Spanneinrichtung (12) und einer bewegbaren Spanneinrichtung (14) einer Glasbearbeitungsdrehbank (GL) getragen ist, wobei das Verfahren umfasst, dass:
ein Brenner (22) von einem Typ vorgesehen wird, der flammengesteuerte Bedingungen erzeugen kann, indem die jeweiligen Durchflüsse eines brennbaren Gases und eines Trägergases gesteuert werden,
wobei das Trägergas von zumindest einer Gruppe von Austragsrohren (42) ausgetragen wird, die koaxial in mehrere Gruppen klassifiziert sind, die jeweils in Bezug auf den Gasdurchfluss steuerbar sind, und
der Vorformling unter den flammengesteuerten Bedingungen bearbeitet wird.

2. Verfahren nach Anspruch 1, wobei die mehreren Gruppen der Austragsrohre in einem Hohlkörper vorgesehen sind, durch den das brennbare Gas strömt, und die mehreren Gruppen koaxial in dem Hohlkörper von einem Zentrum in Richtung seines Außenumfangs angeordnet sind, und die Austragsrohre (42) so angeordnet sind, dass das Trägergas durch diese auf eine Weise geführt wird, so dass es in jeder Gruppe steuerbar ist.

3. Verfahren nach einem der Ansprüche 1 oder 2, wobei der Hohlkörper aus einem Hohlzylinder (40) besteht und die mehreren Gruppen von Austragsrohren konzentrisch in dem Hohlzylinder angeordnet sind, der an einem Ende geschlossen und an dem anderen Ende offen ist.

4. Verfahren nach einem der Ansprüche 1, 2 oder 3, wobei die mehreren Gruppen in einer Anzahl von drei oder vier vorgesehen sind.

5. Verfahren nach einem der vorhergehenden Ansprüche, wobei Durchflüsse von Gasen, die an die Vielzahl von Gruppen und auch an Räume (S1, S2, S3) geliefert werden, die von den Austragsrohren (42) innerhalb des Brenners (22) verschieden sind, jeweils abhängig von dem Durchmesser eines zu bearbeitenden Vorformlings gesteuert werden.

6. Verfahren nach Anspruch 5, wobei die Durchflüsse der Gase schrittweise oder allmählich änderbar sind.

7. Brennersystem, mit:
einem Aufbau mit einem Hohlkörper (40), der an einem Ende geschlossen und an dem anderen Ende offen ist, und durch den ein brennbares Gas geführt werden kann; und
zumindest drei Gruppen (S1, S2, S3) aus koaxial angeordneten inneren Austragsrohren (42), durch die ein Trägergas geführt wird und die in dem Hohlkörper untergebracht sind, wobei die Gruppen eine innerste Gruppe (S3) umfassen;
einer Vielzahl von Gaszufuhrleitungen;
wobei eine erste der Gaszufuhrleitungen (30d) an einem Ende mit dem Hohlkörper verbunden ist;
wobei jede der mehreren Gruppen (S1, S2, S3) mit einem Ende einer einzelnen weiteren Gaszufuhrleitung (30a, 30b, 30c) verbunden ist; einer Quelle für brennbares Gas (33), die an dem anderen Ende der ersten Gasleitung (30d) mit dem Hohlkörper verbunden ist;
einer Quelle für Trägergas (31), die an dem anderen Ende der weiteren Gaszufuhrleitungen (30a, 30b, 30c) mit den jeweiligen mehreren Gruppen verbunden ist;
wobei die erste Gaszufuhrleitung (30d) ein Steuermittel (36d) zur Steuerung des Durchflusses des Gases aufweist, das durch diese zu dem Hohlkörper strömt; und
wobei jede weitere Gaszufuhrleitung (30a, 30b, 30c) ein Steuermittel (36a, 36b, 36c) zur Steuerung des Durchflusses von Gas aufweist, das durch diese zu der jeweiligen Gruppe innerer Austragsrohre (S1, S2, S3) strömt,
**dadurch gekennzeichnet, dass** alle Gruppen (S1, S2, S3) mit Ausnahme der innersten Gruppe (S3) eine Vielzahl von Austragsrohren (42) umfassen, dass die innerste Gruppe (S3) ein einzelnes Austragsrohr (42) umfasst, und dass die Dichte von Rohren in den Gruppen, die von der innersten Gruppe verschieden sind, von dem Zentrum in Richtung des Umfangs des Hohlkörpers (40) zunimmt.

8. Brennersystem nach Anspruch 7, wobei der gesamte Innenquerschnitt des Hohlkörpers (40) mit Ausnahme des Teils, das durch die Austragsrohre besetzt ist, einen Raum (44) umfasst, von dem im Gebrauch das brennbare Gas, das durch die erste Gaszufuhrleitung geliefert wird, ausgetragen wird.

9. Brenner nach einem der Ansprüche 7 oder 8, wobei die Austragsrohre (42) alle denselben Innen- und Außendurchmesser besitzen.

10. Brennersystem nach Anspruch 7, wobei der Hohlkörper aus einem Hohlzylinder (40) besteht und die mehreren Gruppen der inneren Austragsrohre (42) jeweils konzentrisch in dem Hohlzylinder angeordnet sind.

11. Brennersystem nach Anspruch 10, wobei die inneren Austragsrohre in die mehreren Gruppen in einer konzentrischen Art und Weise (S1, S2, S3) klassifiziert sind.

12. Brennersystem nach einem der Ansprüche 10 oder 11, wobei die mehreren Gruppen der inneren Austragsrohre konzentrisch in dem äußeren Hohlzylinder angeordnet sind und die innerste Gruppe bis zu drei Rohre umfasst.

13. Brennersystem nach Anspruch 12, wobei die innerste Gruppe ein Rohr umfasst.

14. Brennersystem nach einem der Ansprüche 7 bis 13, das mit einem brennbaren Gas aus Wasserstoff oder einem Kohlenwasserstoffgas und mit einem Trägergas, das im Wesentlichen aus Sauerstoff besteht, verwendet wird.

15. Brennersystem nach einem der Ansprüche 7 bis 13, das mit einem brennbaren Gas verwendet wird, das im Wesentlichen Wasserstoff umfasst.

16. Brennersystem nach einem der Ansprüche 7 bis 15, wobei das Steuermittel aus einem Handventil und einer Durchflussmengensteuereinheit besteht.

17. Brennersystem nach einem der Ansprüche 7 bis 16, ferner mit einer Steuereinheit, von der ein Steuersignal an die verschiedenen Steuermittel zur Steuerung eines Durchflusses eines Gases übertragen wird, das durch das Steuermittel geliefert wird.

18. Vorformling-Bearbeitungsvorrichtung mit einem Brennersystem nach einem der Ansprüche 7 bis 17.

## Revendications

1. Procédé de traitement d'une préforme (10) supportée par un mandrin fixe (12) et un mandrin mobile (14) d'un tour à verre (GL), le procédé comprenant les étapes consistant à :
prendre un brûleur (22) du type qui est apte à créer des conditions de flamme contrôlée en commandant les débits respectifs d'un gaz inflammable et d'un gaz de support, le gaz de support étant délivré par au moins un groupe de tubes de décharge (42) classés coaxialement en plusieurs groupes dont on peut régler respectivement le débit de gaz, et
traiter la préforme dans les conditions de flamme contrôlée.

2. Procédé selon la revendication 1, dans lequel les différents groupes de tubes de décharge sont placés à l'intérieur d'un corps creux par lequel on fait passer le gaz inflammable, et les groupes sont agencés coaxialement à l'intérieur du corps creux, du centre vers la périphérie extérieure de celui-ci, et les tubes de décharge (42) sont agencés de telle manière que l'on peut faire passer le gaz de support de façon contrôlée dans chaque groupe.

3. Procédé selon la revendication 1 ou 2, dans lequel ledit corps creux est constitué d'un cylindre creux (40) et les groupes de tubes de décharge sont disposés de façon concentrique à l'intérieur du cylindre creux qui est fermé à une extrémité et ouvert à l'autre extrémité.

4. Procédé selon la revendication 1, 2 ou 3, dans lequel les groupes sont au nombre de trois ou quatre.

5. Procédé selon l'une quelconque des revendications précédentes, dans lequel les débits de gaz fournis à la pluralité de groupes et aussi aux espaces (S1, S2, S3) autres que les tubes de décharge (42) à l'intérieur dudit brûleur (22) sont commandés respectivement en fonction du diamètre d'une préforme à traiter.

6. Procédé selon la revendication 5, dans lequel les débits des gaz peuvent être modifiés par paliers ou bien progressivement.

7. Système de brûleur comprenant :
une structure incluant un corps creux (40) fermé à une extrémité et ouvert à l'autre extrémité par laquelle on peut faire passer du gaz inflammable ; et
au moins trois groupes (S1, S2, S3) de tubes de décharge intérieurs agencés coaxialement (42) par lesquels passe un gaz de support et qui sont logés dans le corps creux, lesdits groupes incluant un groupe central (S3) ;
une pluralité de conduites d'alimentation en gaz ;
une première (30d) desdites conduites d'alimentation en gaz étant connectée en une extrémité au corps creux ;
chaque groupe (S1, S2, S3) étant connecté à une extrémité d'une autre conduite individuelle parmi lesdites conduites d'alimentation (30a, 30b, 30c) ;
une source de gaz inflammable (33) connectée à l'autre extrémité de la première conduite de gaz (30d) au corps creux ;
une source de gaz de support (31) connectée à l'autre extrémité des autres conduites d'alimentation en gaz (30a, 30b, 30c) aux groupes respectifs ;
la première conduite d'alimentation en gaz (30d) comprenant un moyen de réglage (36d) pour régler le débit du gaz qui y passe pour aller jusqu'au corps creux ; et
chacune des autres conduites d'alimentation en gaz (30a, 30b, 30c) comportant un moyen de réglage (36a, 36b, 36c) pour régler le débit du gaz qui y passe pour aller jusqu'au groupe respectif de tubes de décharge intérieurs (S1, S2, S3),
**caractérisé en ce que** tous les groupes (S1, S2, S3), sauf le groupe central (S3), comprennent une pluralité de tubes de décharge (42), **en ce que** le groupe central (S3) comprend un seul tube de décharge (42), et **en ce que** la densité des tubes dans les groupes autres que le groupe central augmente du centre vers la périphérie du corps creux (40).

8. Système de brûleur selon la revendication 7, dans lequel toute la section transversale intérieure du corps creux (40), sauf la partie occupée par les tubes de décharge, comprend un espace (44) depuis lequel, en utilisation, le gaz inflammable fourni par la première conduite d'alimentation en gaz est déchargé.

9. Système de brûleur selon la revendication 7 ou 8, dans lequel les tubes de décharge (42) ont tous les mêmes diamètres intérieur et extérieur.

10. Système de brûleur selon la revendication 7, dans lequel ledit corps creux est constitué d'un cylindre creux (40) et les groupes de tubes de décharge intérieurs (42) sont disposés de façon concentrique à l'intérieur dudit cylindre creux, respectivement.

11. Système de brûleur selon la revendication 10, dans lequel les tubes de décharge intérieurs sont classés en les différents groupes de façon concentrique (S1, S2, S3).

12. Système de brûleur selon la revendication 10 ou 11, dans lequel les groupes de tubes de décharge sont disposés de façon concentrique à l'intérieur dudit cylindre creux extérieur et le groupe central comprend jusqu'à trois tubes.

13. Système de brûleur selon la revendication 12, dans lequel ledit groupe central comprend un tube.

14. Système de brûleur selon l'une quelconque des revendications 7 à 13, utilisé avec un gaz inflammable d'hydrogène ou un gaz d'hydrocarbure et avec un gaz de support constitué essentiellement d'oxygène.

15. Système de brûleur selon l'une quelconque des revendications 7 à 13, utilisé avec un gaz inflammable qui est constitué essentiellement d'hydrogène.

16. Système de brûleur selon l'une quelconque des revendications 7 à 15, dans lequel ledit moyen de réglage est constitué d'un robinet à commande manuelle et d'un dispositif de régulation de débit massique.

17. Système de brûleur selon l'une quelconque des revendications 7 à 16, comprenant en outre une unité de commande qui envoie un signal de commande aux différents moyens de réglage pour régler le débit d'un gaz devant être fourni via lesdits moyens de réglage.

18. Appareil de traitement de préforme incluant un système de brûleur conforme à l'une quelconque des revendications 7 à 17.
